# EUROPEAN PATENT APPLICATION

(11) **EP 2 372 387 A1**
(43) Date of publication of application: **05.10.2011**
(21) Application number: 08878547.2
(22) Date of filing: 01.12.2008
(51) Int. Cl.: G01S 7/03, B05D 7/24, B60R 13/00, B60R 19/52, C09D 5/38

(54) **DECORATIVE FILM AND METHOD FOR DECORATIVE FILM FORMATION**

(71) Applicant: Toyota Jidosha Kabushiki Kaisha, Toyota-shi, Aichi 471-8571 (JP)
(72) Inventor: YANAGIMOTO, Hiroshi, Toyota-shi Aichi 471-8571 (JP); BESSHO, Takeshi, Toyota-shi Aichi 471-8571 (JP)
(74) Representative: Intès, Didier Gérard André
(86) International application number: PCT/JP2008/071765
(87) International publication number: WO 2010/064285

(57) **Abstract**

The present invention relates to a decorative film formed on the surface of a resin substrate positioned within a radar device path and a method for forming the same. The present invention provides a decorative film that can be formed with high yield and efficiency without highly accurate film thickness regulation and is excellent in terms of radiowave transmission performance and appearance design, with a metallic color tone, and to provide a method for forming the same. Such method is a method for forming a decorative film 10 on the surface of a resin substrate 101 positioned within a radar device path, wherein a decorative film 10 comprising an organic film 12 in which metal nanoparticles 11 are dispersed is formed by producing an organic material comprising a solvent in which metal nanoparticles 11 that are coordinated to organic molecules are dispersed, applying the organic material to the surface of a resin substrate 101, and volatilizing the solvent.

## Description

### Technical Field

The present invention relates to a decorative film formed on the surface of a resin substrate within a radar device path and a method for forming the same.

### Background Art

For antennas of communication equipments, radars, and the like used for radiowave transmission and reception, their functions are given priority. Therefore, the structure of an antenna body or the outer structure of an antenna is not limited in terms of design. For example, a rod antenna is used as a vehicle radio antenna in a manner such that the antenna structure can be seen from the outside of a vehicle. Depending on the position at which an antenna is installed, it is desirable that an antenna cannot be seen from the outside of a vehicle. For instance, a radar for determining the distance between a vehicle and an obstacle in front of the vehicle or the inter-vehicle distance between vehicles is preferably positioned at the center of a vehicle front portion such that it can exert its performance. In such case, an antenna is attached to a portion in the proximity of a vehicle front grille. However, in terms of design, it is preferable that an antenna cannot be seen from the outside of a vehicle.

As an aside, an auto-cruise (cruise control) system relates to the technology of determining the inter-vehicle distance between the own vehicle and a vehicle in front of the vehicle or the relative speed by a sensor mounted on a vehicle front portion, regulating a throttle or brake based on the obtained information, and controlling the inter-vehicle distance while accelerating or decelerating the own vehicle. In recent years, the auto-cruise system has been gaining attention as an intelligent transport system (ITS) in order to reduce traffic jam or traffic accidents. In general, radiowave transmitting and receiving apparatuses such as millimeter-wave radars are used as sensors for such auto-cruise system.

In general, a radar apparatus provided to a vehicle is positioned behind a front grille. Usually, an emblem of an automaker or a decorative product specific to a vehicle is attached to a front grille. A millimeter radiowave emitted from a radar apparatus of a vehicle is radiated forward through a front grille or an emblem and then is reflected by a vehicle or an obstacle in front of the vehicle so as to return to the radar apparatus through the front grille or the emblem. Therefore, it is desirable to use a material or a paint that is unlikely to cause loss of radiowave transmission and can impart a desirable aesthetic appearance for a front grille, an emblem, or the like which is positioned within a beam path of a radar apparatus.

Due to the above reasons, in general, a window portion that allows radiowave transmission is provided to a front grille part where a radiowave transmitting and receiving apparatus is positioned. Radiowave transmission/reception can be achieved through such window portion. On the other hand, if such window portion is provided, the continuity of a front grille appearance disappears. Accordingly, a radiowave transmitting and receiving apparatus, an engine room, and the like in a vehicle can be seen through the window portion, resulting in an increased risk of impairing a preferable vehicle appearance. Hitherto, for example, a radiowave-permeable cover has been inserted into a window portion of a front grille such that the window portion and the front grille body can be recognized as an integrated part as disclosed in Patent Document 1. For instance, the radiowave-permeable cover disclosed in Patent Document 1 is formed by laminating a plurality of resin layers which are formed to have concave-convex surfaces. Such part serving as a cover has metal layers vapor-deposited between resin layers such that concave-convex portions are formed between resin layers. With the use of such part, it looks as if a fin member of a front grille were continuously present within a radiowave-permeable cover.

As the above metal to be vapor-deposited on a radiowave-permeable cover, indium is usually used. However, when indium is vapor-deposited on a material, island shapes are formed with vapor-deposited indium in a fine pattern on the surface of the material, indicating a uniform film is not formed thereon. Specifically, as a result of vapor-deposition of indium on a material, a vapor deposition portion on which island shapes are formed with vapor-deposited indium in a fine pattern and a non-vapor deposition portion on which no shapes are formed with indium coexist on the surface of the material such that a fine pattern is formed. Radiowave transmission/reception can be achieved through such non-vapor deposition portion. In addition, island shapes are formed with vapor-deposited indium in a fine pattern on a vapor deposition portion and thus the surface of the material can be visually recognized as having a metallic shine. Such technique belongs to the technical field of Patent Document 1. A technique for forming a metal layer by vapor deposition or sputtering as disclosed in Patent Document 1 is disclosed in Patent Documents 2 and 3.

However, it is difficult to form a vapor deposition portion and a non-vapor deposition portion in a well-balanced manner. For instance, when vapor deposition portions were formed very close to each other, good radiowave transmission/reception was not achieved.

Further, although an indium film is preferable as a film used for an emblem or the like because it exhibits a metal color, it is likely to be detached and thus has poor durability and abrasion resistance, which is disadvantageous. In addition, since indium is a metal, it cannot be denied that there is a probability of erosion on an indium film. In order to solve such problem, it is possible to form a ceramic film comprising silicon dioxide or the like so as to improve durability and protect a film or coating. However, such ceramic film comprising silicon dioxide or the like is colorless and therefore it cannot exhibit a good appearance in terms of a metal color or the like. This is disadvantageous in terms of design.

In order to solve the above problems, the present applicant has disclosed an idea of a molding product used within a beam path in a radar apparatus, which is composed of a base comprising a resin layer and a bright decorative layer comprising tin and/or a tin alloy that is formed on the base surface (Patent Document 4). Accordingly, it has become able to improve hardness and abrasion resistance over the conventional indium layers and further to improve radiowave permeability over the conventional indium layers with the use of such bright decorative layer comprising tin and/or a tin alloy.
Patent Document 1: JP Patent Publication (Kokai) No. 2000-159039 A
Patent Document 2: Patent No. 3366299
Patent Document 3: Patent No. 3597075
Patent Document 4: JP Patent Publication (Kokai) No. 2005-212745 A

### Disclosure of the Invention

### Problem to be Solved by the Invention

According to the molding product used within a beam path in a radar apparatus disclosed in Patent Document 4, hardness and abrasion resistance can be improved over the conventional indium layers. In addition, radiowave transmission performance can be improved over such indium layers. However, also in this case, a molding product is obtained by molding a thin film via vapor deposition of a metal such as tin on the surface of a transparent resin molding product. Therefore, the invention disclosed in Patent Document 4 has problems similar to those of the techniques disclosed in Patent Documents 1 to 3. In addition, according to Patent Document 4, it is essential to achieve very thin film thickness in order to avoid formation of a continuous film with a vapor-deposited metal, requiring film thickness regulation with high accuracy. In this case, the production yield tends to decrease. Further, the invention disclosed in Patent Document 4 has the following problems that should be solved for film production: the problem related to cost increase with the use of a vapor deposition method; the problem related to the requirement of highly accurate film thickness regulation that tends to result in decreased production yield and prolonged production time; the problem related to the requirement of a metal property of realizing non-continuous film formation on a resin that results in limitation of metal species to be used; and the problem related to the requirement of opaque resin layer formation for the purpose of emphasizing a color tone for high light transmittance.

The present invention has been made in view of the above problems. For example, the present invention relates to a decorative film formed on the surface of a resin substrate positioned within a radar device path and a method for forming the same. Therefore, an object of the present invention is to provide a decorative film that can be formed with high yield and efficiency without highly accurate film thickness regulation and is excellent in terms of radiowave transmission performance and appearance design, with a metallic color tone, and to provide a method for forming the same.

### Means for Solving Problem

In order to achieve the above object, the decorative film formation method of the present invention is a method for forming a decorative film on the surface of a resin substrate to be positioned within a radar device path, wherein a decorative film comprising an organic film in which metal nanoparticles are dispersed is formed by producing an organic material comprising a solvent in which metal nanoparticles that are coordinated to organic molecules are dispersed, applying the organic material to the surface of a resin substrate, and volatilizing the solvent.

A decorative film formed by the formation method of the present invention is applied to the surface of a resin substrate to be positioned within a radar device path. Therefore, it is a film having a metallic shine in terms of appearance and electrical insulation (radiowave transmission) properties. Originally, such decorative film was able to serve as a current-carrying film because it has a metallic shine. However, the film of the present invention comprises an organic film in which metal nanoparticles are dispersed such that the film has insulation properties in addition to its metallic shine. This is because metal particles to be dispersed are metal nanoparticles, and thus the distance between particles is very short, resulting in fine aggregation of the particles. Accordingly, the metallic shine of the film can be visually recognized. In addition, millimeter wave damping is significantly reduced when a radiowave passes through nanoparticles. As a result, a film having electrical insulation properties can be obtained while maintaining the metallic shine of the film. Herein, examples of a resin substrate to which a decorative film is applied include general substrates such as emblems of automakers and decorative products specific to vehicles described above.

In the above formation method, first, metal nanoparticles to which organic molecules are coordinated are generated. The resultant is dispersed in a solvent such that an organic material is generated. Herein, the expression "coordinated" indicates that metal nanoparticles and organic molecules (organic polymer) are bound to each other with chemical interaction. In addition, metal nanoparticles to be used herein are not particularly limited. However, examples of metals that can be used for metal nanoparticles include gold or an alloy thereof, silver or an alloy thereof, tin or an alloy thereof, and indium or an alloy thereof. In particular, it is preferable to use silver or an alloy thereof in view of material cost and a metallic shine.

Next, the above organic material is applied to the surface of a resin substrate and the solvent is volatilized such that a decorative film is formed. In addition, examples of a method for such application include spin coating, bar coating, screen printing, spray coating, gravure printing, and roll coating.

A decorative film formed by the above method is a film comprising an organic film in which metal nanoparticles that are bound to each other by being coordinated to organic molecules are dispersed. Such film is obtained as a film comprising an organic film (formed with organic molecules) in which metal nanoparticles are dispersed. In this case, each organic molecule functions as a binder or a protection material between metal nanoparticles so as to bind metal nanoparticles without causing tight adhesion between metal nanoparticles. In such micro structure in which metal nanoparticles are dispersed in an organic film, metal nanoparticles are three-dimensionally dispersed in an organic film. Such structure obviously differs from a micro structure of a thin film formed by vapor deposition in which metal fine particles are two-dimensionally placed in the cases of the conventional techniques described above.

The above formation method of the present invention is a very simple formation method wherein an organic material obtained by dispersing metal nanoparticles in a solvent is applied to the surface of a resin substrate and the solvent is volatilized. Therefore, the formation cost is significantly reduced compared with the above conventional methods involving vapor deposition or the like. Also, the production time can be shortened and the production yield can be significantly increased.

In addition, in another embodiment of the decorative film formation method of the present invention, a surface on which a decorative film is formed may be a surface of a resin sheet that is adhered to a resin substrate surface positioned within a radar device path.

For instance, the above method is used when a resin sheet having a surface on which the above decorative film has been formed is adhered or attached to the back side of a front grille or an emblem. The term "resin sheet" used herein refers to a sheet on the surface of which a sticking tape or an adhesive tape is applied for adhesion or it refers to a sheet on the surface of which an adhesive is applied such that the surface is bonded to an emblem or the like. In addition, examples of material for such resin sheet include PET, PMMA (polymethylmethacrylate), PEN, COP (cycloolefin polymer), and polyamide.

According to the present inventors, in view of the occurrence or nonoccurrence of disappearance of a metallic shine (the presence or absence of the influence on a color tone) or millimeter wave damping performance (damping rate), it has been demonstrated that it is preferable to specify the metal nanoparticle particle size within a certain range and/or to specify the metal nanoparticle concentration in an organic film within a certain range. In addition, the term "particle size" used herein refers to the diameter of a metal nanoparticle in a spherical shape or an approximate spherical shape, and it also refers to the maximum diameter of a metal nanoparticle in a different shape. For instance, the term refers to the average particle size determined based on particle sizes observed in a decorative film.

First, regarding the range of metal nanoparticle particle size, the particle size can be determined to be from 2 nm (nanometer) to 800 nm. If it is not more than 1 nm, a metallic shine disappears and thus a desirable color tone cannot be realized. If it exceeds 800 nm, millimeter wave damping performance of each metal nanoparticle is increased. Accordingly, the millimeter wave damping rate exceeds the threshold of 2 dB even if metal nanoparticles are dispersed in an organic film. As a result, desirable radiowave transmission performance cannot be obtained. The present invention is based on the above findings. In addition, it has been demonstrated that a more preferable range of metal nanoparticle particle size that results in decreased millimeter wave damping performance (damping rate) is particularly preferably from 2 to 15 nm, with the above range. This is because when the metal nanoparticle particle size is in the above range, the millimeter wave damping performance (damping rate) is significantly reduced to a greater extent, compared with a case in which the particle size is from more than 15 nm to 800 nm. The term "millimeter radiowave" used herein refers to a radiowave (electromagnetic wave) with a bandwidth of approximately 30 GHz to 300 GHz. For example, the bandwidth can be specified as approximately 76 GHz.

Meanwhile, it has been demonstrated that the range of a metal nanoparticle concentration in an organic film (decorative film) is determined to be preferably from 30% to 98% by weight. This is based on the following findings. When the metal nanoparticle concentration is less than 30% by weight, the distance between metal nanoparticles is excessively increased such that a metallic shine disappears and a desirable color tone cannot be realized. When it is more than 99% by weight, metal nanoparticles collide to each other and thus the millimeter wave damping rate exceeds 2 dB because of partial formation of a metal continuous layer on the film surface with collided metal nanoparticles. As a result, desirable radiowave transmission performance cannot be realized.

Further, according to the present inventors, it has been demonstrated that the decorative film thickness is preferably determined within a certain range in view formation or non-formation of a decorative film with a certain thickness by a film formation method involving the application of an organic material or in view of millimeter wave damping performance (damping rate). Specifically, the decorative film thickness is desirably from 0.05 µm to 40 µm. This is based on the finding that it exists no practical method whereby an organic material, in which metal nanoparticles are dispersed, can be applied so as to result in a thickness of less than 0.05 µm, indicating that the decorative film thickness always results in more than 0.05 µm. If the decorative film thickness exceeds 40 µm (when silver nanoparticles are used as metal nanoparticles, the silver specific gravity of 10.49 and a specific gravity of an organic component in an organic film of 1 result in a metal thickness of 2.3 µm), the millimeter wave damping rate exceeds 2 dB. As a result, desirable radiowave transmission performance cannot be realized.

Therefore, the decorative film of the present invention is a decorative film formed on the surface of a resin substrate positioned within a radar device path or a decorative film formed on the surface of adhesive sheet that is attached to the surface of a resin substrate positioned within a radar device path, which comprises an organic film in which metal nanoparticles (to which organic molecules are coordinated so as to bind the metal nanoparticles to each other) are dispersed. Note that the metal nanoparticle particle size is specified within the aforementioned specific range, the metal nanoparticle concentration in a decorative film is specified within the aforementioned specific range, and/or the decorative film thickness is specified within the aforementioned specific range.

### Effects of the Invention

As is understood based on the above descriptions, a decorative film can be formed by a very simple formation method according to the decorative film formation method of the present invention and a decorative film formed by the method. Therefore, formation cost can be significantly reduced and production time can be shortened, allowing the significant improvement of the production yield. In addition, a decorative film having a desirable metallic shine and a very low millimeter wave damping rate can be obtained.

### Brief Description of the Drawings

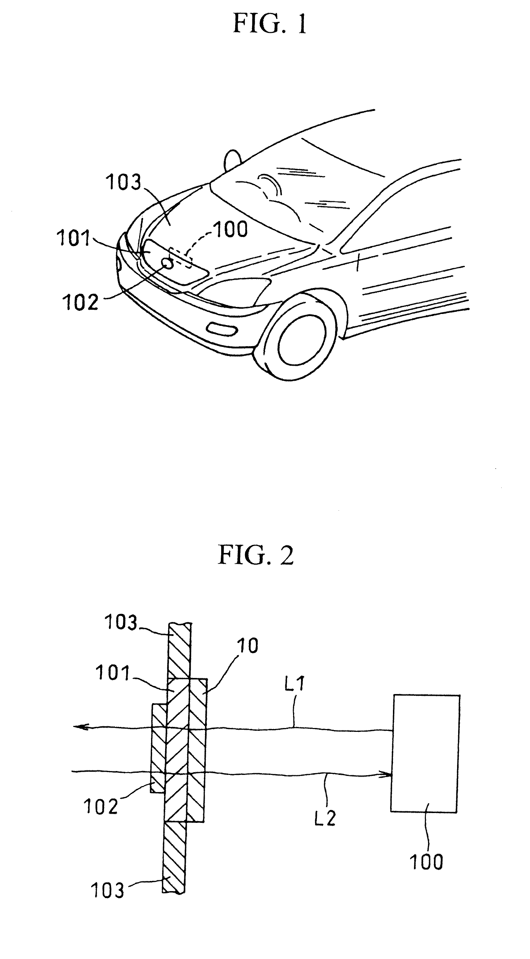

Fig. 1 schematically shows the relationship between a resin substrate composed of a front grille and an emblem positioned at the front part of a vehicle and a radar apparatus positioned behind the resin substrate within the vehicle.
Fig. 2 shows a longitudinal section of a decorative film directly formed on a resin substrate in one embodiment of the present invention. The figure illustrates a situation in which a millimeter radiowave emitted from a radar apparatus is radiated forward through the resin substrate and then is reflected by an object in front of the radar apparatus so as to return to the radar apparatus through the resin substrate.

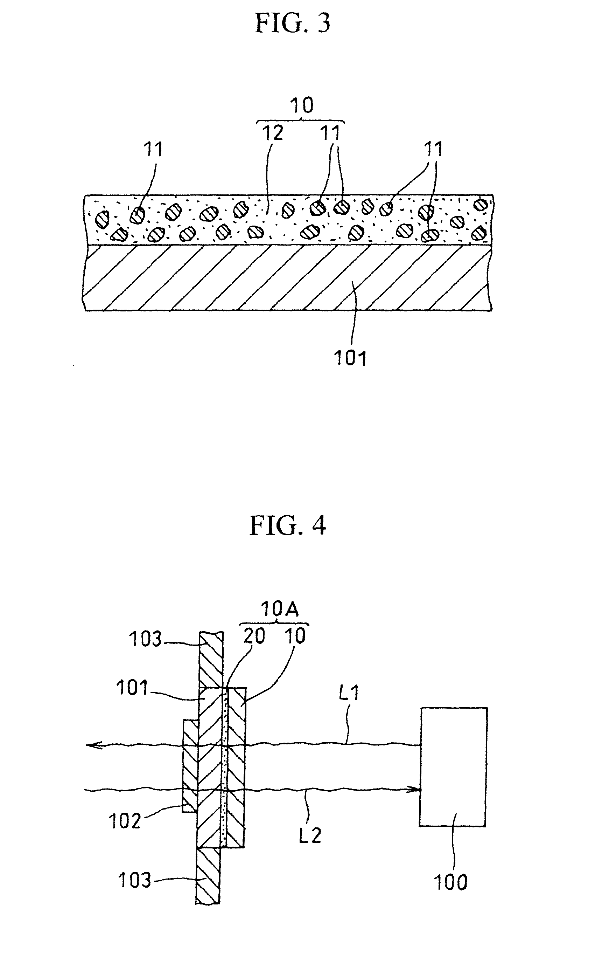

Fig. 3 shows an enlarged longitudinal section of the internal structure of the decorative film shown in Fig. 2.
Fig. 4 shows a longitudinal section of a decorative film bonded to a resin substrate in another embodiment of the present invention. The figure illustrates a situation in which a millimeter radiowave emitted from a radar apparatus is radiated forward through the resin substrate and then is reflected by an object in front of the radar apparatus so as to return to the radar apparatus through the resin substrate.

### Description of Symbols

10, 10A: Decorative film; 11: Metal nanoparticles; 12: Organic film; 20: Resin sheet; 100: Radar apparatus; 101: Front grille (resin substrate); 102: Emblem (resin substrate); 103: Vehicle body; L1: Emitted millimeter radiowave; L2: Reflected millimeter radiowave

### Best Mode for Carrying Out the Invention

Embodiments of the present invention are described below with reference to the drawings. In addition, an embodiment in which an opaque resin layer is further formed on the surface of a decorative film formed on a resin substrate surface for color tone enhancement can be employed (not shown in the drawings).

Fig. 1 schematically shows the relationship between a resin substrate composed of a front grille and an emblem positioned at the front part of a vehicle and a radar apparatus positioned behind the resin substrate within the vehicle. Fig. 2 shows a longitudinal section of a decorative film directly formed on a resin substrate in one embodiment of the present invention. The figure illustrates a situation in which a millimeter radiowave emitted from a radar apparatus is radiated forward through the resin substrate and then is reflected by an object in front of the radar apparatus so as to return to the radar apparatus through the resin substrate. Fig. 3 shows an enlarged longitudinal section of the internal structure of the decorative film shown in Fig. 2.

As shown in Figs. 1 and 2, a decorative film 10 of the present invention is used for, for example, the back face (vehicle-interior-side face) of a resin substrate composed of a front grille 101 and an emblem 102 positioned at the front part of a vehicle body 103. Such decorative film is formed within the passage route (or radar device path) for millimeter radiowaves L1 and L2. A millimeter radiowave L1 emitted from a radar apparatus 100 positioned within a vehicle is radiated forward through the resin substrate. A millimeter radiowave L2 reflected by an object (e.g., a vehicle) in front of the vehicle returns and passes through the resin substrate in a similar manner so as to be captured by the radar apparatus 100.

Here, the microstructure of a decorative film 10 and a method for forming the same are described with reference to Fig. 3.

A decorative film 10 is formed by dispersing metal nanoparticles 11 of a metal such as gold or an alloy thereof, silver or an alloy thereof, tin or an alloy thereof, or indium or an alloy thereof in an organic film 12.

A specific method for producing such decorative film is described in the Examples in which gold was used for metal nanoparticles 11.

First, gold nanoparticles to which organic molecules are coordinated are generated. Specifically, a toluene solution containing 0.6 mM (mM: millimolar) tetraoctylammonium bromide and a 0.3 mM chlorauric acid aqueous solution are mixed at a ratio of 2:1, followed by stirring (to prepare first liquid mixture). Next, a 0.3 mM octadecanethiol solution is mixed with the first liquid mixture at a ratio of 1:6 (to prepare a second liquid mixture). Subsequently, a 300 mM sodium borohydride aqueous solution is mixed with the second liquid mixture at a ratio of 1:7. After the reaction, separatory funnel extraction of a toluene solution is carried out.

Then, the obtained toluene solution is added dropwise to ethanol, and the resulting precipitate is filtered with a membrane filter and washed several times with ethanol. Thus, solid matter (gold nanoparticles to which organic molecules are coordinated) can be obtained from the precipitate.

The thus obtained gold nanoparticles to which organic molecules are coordinated are added to toluene used as a good solvent for dispersion. Thus, an organic material in which gold nanoparticles (metal nanoparticles) are dispersed (a metal-nanoparticle-dispersed organic film precursor) can be generated.

The above organic material is uniformly applied to the surface of a resin substrate 101 by, for example, a bar-coating method. Then, the solvent is volatilized in a high-temperature atmosphere at approximately 80°C to 100°C. Accordingly, a decorative film 10 comprising an organic film 12 in which gold nanoparticles (metal nanoparticles 11) (to which organic molecules are coordinated) are dispersed is generated on the resin substrate 101. It is also possible to generate an organic film in which silver nanoparticles are dispersed with the use of silver chloride during film generation.

Fig. 4 shows a longitudinal section of a decorative film bonded to a resin substrate in another embodiment of the present invention. The figure illustrates a situation in which a millimeter radiowave emitted from a radar apparatus is radiated forward through the resin substrate and then is reflected by an object in front of the radar apparatus so as to return to the radar apparatus through the resin substrate.

A decorative film 10A shown in Fig. 4 is a film prepared by previously forming a resin sheet 20 on one face of a decorative film 10 having an internal structure similar to that shown in Fig. 3. In the embodiment shown in Fig. 4, a resin sheet 20 is bonded or attached to a resin substrate. That is, a decorative film 10 is formed by directly applying the aforementioned organic material to a resin substrate. Meanwhile, a decorative film 10A is formed by applying the organic material to the surface of a resin sheet 20. The thus formed decorative film 10A is bonded or attached to a resin substrate.

In addition, a resin sheet 20 can be formed with PET, PMMA (polymethylmethacrylate), PEN, COP (cycloolefin polymer), polyamide, or the like. Further, in one embodiment, an adhesive sheet is attached to a resin substrate. In another embodiment, an adhesive sheet is bonded to the adhesion face of a resin substrate via an adhesive.

A decorative film 10A is prepared by forming a decorative film 10 on the above resin sheet 20, providing the following effects. One effect is to facilitate the formation of a uniform decorative film that follows a concave-convex pattern on the resin substrate surface. This is because a decorative film is formed via a resin sheet on a resin substrate that usually has a concave-convex pattern on its surface, unlike the cases of conventional methods wherein a metal-nanoparticle-dispersed organic film precursor is directly applied to the resin substrate surface. In addition, another effect is to prevent loss of extensibility or the capacity to follow patterns imparted to a resin sheet, unlike the cases of conventional techniques (dry methods) wherein a metal film is formed on a resin sheet via vapor deposition.

### [Experiments related to metal nanoparticle particle size range, weight concentration, and film thickness, experiments related to radiowave transmission loss, and experimental results]

The present inventors prepared an organic film precursor in which metal nanoparticles were dispersed and then formed a variety of decorative films on resin substrate (resin molding product) test pieces by the method described below. The present inventors conducted experiments for determining metal nanoparticle particle size, metal nanoparticle concentration, decorative film thickness, and the upper and lower limits thereof.

The metal nanoparticle generation method used herein is as described above. Specifically, a toluene solution containing 0.6 mM (mM: millimolar) tetraoctylammonium bromide and a 0.3 mM chlorauric acid aqueous solution are mixed at a ratio of 2:1, followed by stirring for preparation of a liquid mixture. Then, 0.3 mM octadecanethiol is mixed with the liquid mixture at a ratio of 1:6 for preparation of another liquid mixture and a 300 mM sodium borohydride aqueous solution is mixed with the prepared liquid mixture at a ratio of 1:7. After the reaction, separatory funnel extraction of a toluene solution is carried out. Then, the obtained toluene solution is added dropwise to ethanol. The resulting precipitate is filtered with a membrane filter and washed several times with ethanol. Accordingly, solid matter (gold nanoparticles to which organic molecules are coordinated) is separated from the precipitate. The obtained gold nanoparticles are added to toluene used as a good solvent for dilution and dispersion. The resultant is added dropwise to a micro grid and dried, followed by particle size determination using a transmission electron microscope. In this determination method, the diameters (maximum size) of directly observed gold nanoparticles (400 particles) are determined and the mean value of the diameters is designated as the particle size. The mean value obtained herein was 4 nm.

Then, the obtained gold nanoparticles to which organic molecules were coordinated were added to toluene used as a good solvent for dilution and dispersion. Thus, an organic material (a gold nanoparticle-dispersed organic film precursor) in which gold nanoparticles were dispersed was formed. The gold concentration was 60% by weight.

The aforementioned gold-nanoparticle-dispersed organic film precursor was uniformly applied to a test piece comprising a polycarbonatemolding substrate (resin molding product) with a thickness of 3.5 mm by a bar-coating method. The solvent was removed by volatilization at 80°C to 100°C. Thus, a decorative film comprising an organic film in which gold nanoparticles were dispersed was formed on a polycarbonate molding substrate.

The above method was carried out using silver nanoparticles as metal nanoparticles. Thus, a decorative film comprising an organic film in which silver nanoparticles were dispersed was also formed.

A variety of test pieces were each prepared by forming a decorative film comprising an organic film in which gold or silver metal nanoparticles were dispersed on a polycarbonate molding substrate. First, the difference in level between a decorative film formation part and a non-decorative film formation part was determined using a surface roughness meter. Then, the total thickness of each test piece was obtained.

Further, a solvent was removed by volatilization from a metal-nanoparticle-dispersed organic film precursor. Then, the metal nanoparticle content was calculated based on the residual weight proportion obtained after heating to 600°C by TG-DTA (thermogravimetry-differential thermal analysis) (TG: a method using a thermogravimetry apparatus wherein the weight change of a substance is determined as a function of temperature or time during heating, cooling, or maintenance of a constant temperature; DTA: a differential thermal analysis (DTA) method whereby the temperature difference between a sample and a reference substance is determined as a function of temperature or time when the both are placed in, for example, a single furnace and subjected to heating or cooling; TG-DTA: a method using a simultaneous thermoanalysis apparatus wherein two types of information (TG information and DTA information) are simultaneously obtained during a single instance of determination).

Herein, for the Comparative Example, a thin film of tin was formed at a given film thickness on a polycarbonate molding substrate by vacuum vapor deposition.

Table 1 below lists experimental results based on which the upper and lower limits of the metal nanoparticle particle sizes were specified. Table 2 below lists experimental results based on which the upper and lower limits of the metal concentrations of metal nanoparticles were specified. Table 3 below lists experimental results based on which the upper and lower limits of the film thicknesses of decorative films were specified. In addition, Table 3 lists results in terms of metal thickness when the silver specific gravity was 10.49 and the specific gravity of a non-silver organic film was 1. Further, Table 4 lists metal composition conditions, metal particle size conditions, and other conditions for Examples 1 to 3 and the Comparative Example. Table 5 lists radiowave transmission loss determination results and light permeability determination results obtained based on the results listed in Table 4 for the Examples and the Comparative Example. In addition, radiowave transmission loss was determined at 76 GHz, which is a frequency adequate for an in-car millimeter-wave radar. Further, regarding light permeability, light transmittance (wavelength: 550 nm) was determined using a visible-ultraviolet spectrophotometer.

**[Table 1]**

| Metal composition | Metal particle size (nm) | Metal concentration (% by weight) | Film thickness (µm) | Color tone (metallic shine) | Millimeter wave damping rate (dB) |
|---|---|---|---|---|---|
| Gold | 1 | 80 | 0.2 | NG | 0.3 |
| Gold | 2 | 80 | 0.2 | OK | 0.4 |
| Silver | 5 | 96 | 0.5 | OK | 0.6 |
| Silver | 10 | 98 | 0.5 | OK | 0.6 |
| Silver | 15 | 98 | 0.5 | OK | 0.6 |
| Silver | 20 | 96 | 0.5 | OK | 1.2 |
| Silver | 30 | 70 | 5 | OK | 1.1 |
| Silver | 100 | 90 | 5 | OK | 1.2 |
| Silver | 200 | 60 | 30 | OK | 1.8 |
| Silver | 250 | 60 | 5 | OK | 1.2 |
| Silver | 800 | 60 | 20 | OK | 1.7 |
| Silver | 1000 | 60 | 20 | OK | 2.5 |

**[Table 2]**

| Metal composition | Metal particle size (nm) | Metal concentration (% by weight) | Film thickness (µm) | Color tone (metallic shine) | Millimeter wave damping rate (dB) |
|---|---|---|---|---|---|
| Silver | 100 | 10 | 5 | NG | 1.1 |
| Silver | 100 | 30 | 5 | OK | 1.2 |
| Silver | 100 | 60 | 5 | OK | 1.3 |
| Silver | 20 | 96 | 0.5 | OK | 1.2 |
| Silver | 10 | 98 | 0.5 | OK | 0.6 |
| Silver | 20 | 99 | 0.5 | OK | 4.2 |

**[Table 3]**

| Metal composition | Metal particle size (nm) | Metal concentration (% by weight) | Film thickness (µm) | Metal thickness (µm) | Color tone (metallic shine) | Millimeter wave damping rate (dB) |
|---|---|---|---|---|---|---|
| Silver | 5 | 96 | 0.05 | 0.0046 | OK | 0.5 |
| Silver | 5 | 96 | 0.5 | 0.0046 | OK | 0.6 |
| Silver | 100 | 90 | 5 | 0.4290 | OK | 1.2 |
| Silver | 800 | 60 | 20 | 1.1439 | OK | 1.7 |
| Silver | 200 | 60 | 30 | 1.7159 | OK | 1.8 |
| Silver | 800 | 60 | 40 | 2.2879 | OK | 1.9 |
| Silver | 800 | 60 | 50 | 2.8599 | NG | 2.6 |

**[Table 4]**

| | Example 1 | Example 2 | Example 3 | Comparative Example |
|---|---|---|---|---|
| Metal composition | Gold | Silver | Silver | Tin |
| Metal particle size (nm) | 3 | 100 | 200 | Continuous film |
| Film thickness (µm) | 0.4 | 25 | 30 | 0.1 |
| Metal concentration (% by weight) | 80 | 60 | 60 | 100 |
| Color tone | Gold | Silver | Silver | Silver |

**[Table 5]**

| | Example 1 | Example 2 | Example 3 | Comparative Example |
|---|---|---|---|---|
| Millimeter wave damping rate (dB) | 1.5 | 2.5 | 2.1 | 4.2 |
| Light transmittance (%T) | 0 | 0 | 0 | 10 |

First, it is revealed based on Table 1 that a metallic shine disappears when the metal nanoparticle particle size becomes 1 mm or less. Accordingly, in terms of color tone, a metal nanoparticle particle size that is not more than 1 nm can be evaluated as "NG (not acceptable)." On the other hand, when the metal nanoparticle particle size exceeds 800 nm, millimeter wave damping performance is increased for each metal nanoparticle. In such a case, even if particles are dispersed, the millimeter wave damping rate exceeds the threshold of 2 dB. Therefore, a particle size of more than 800 nm can be evaluated as "NG." Consequently, it was demonstrated in this experiment that the metal nanoparticle particle size is preferably from 2 to 800 nm.

Further, it is revealed based on Table 1 that millimeter wave damping performance is extremely decreased particularly when the particle size is 15 nm or less, with the above range (2 to 800 nm). Therefore, it was demonstrated that the metal nanoparticle particle size is preferably from 2 to 800 nm. In terms of millimeter wave damping performance, it is desirably from 2 to 15 nm.

Next, it is understood based on Table 2 that when the metal nanoparticle concentration in a decorative film is less than 30% by weight, the distance between metal nanoparticles is excessively increased, resulting in loss of a metallic shine. Therefore, in terms of color tone, the above range can be evaluated as "NG." On the other hand, when the metal nanoparticle concentration in a decorative film is 99% by weight or greater, metal nanoparticles collide with each other such that a continuous metal layer would be partially formed. As a result, the millimeter wave damping rate (indicating millimeter wave damping performance) exceeds the threshold of 2 dB. Therefore, this range also can be evaluated as "NG." Accordingly, it was demonstrated that the metal nanoparticle concentration in a decorative film is preferably from 30% to 98% by weight.

Next, it is understood based on Table 3 that when the metal thickness exceeds 2.3 µm (when the film thickness of a decorative film exceeds 40 µm), the millimeter wave damping rate (indicating millimeter wave damping performance) exceeds the threshold of 2 dB, given that a continuous metal layer is formed along the incoming millimeter radiowave direction. Accordingly, this range can be evaluated as "NG." Meanwhile, it was also revealed that if the film thickness is less than 0.05 µm upon molding by a method involving the application of a decorative film in which metal nanoparticles are dispersed, molding becomes very difficult in practice. Therefore, the film thickness is desirably 0.05 µm or greater. Accordingly, it was demonstrated that the film thickness of a decorative film comprising an organic film in which metal nanoparticles are dispersed is preferably from 0.05 to 40 µm.

Radiowave transmission loss at 76 GHz was determined for Examples 1 to 3 and the Comparative Example based on the results listed in Table 4. Thus, the results listed in Table 5 were obtained.

In Table 5, the millimeter wave damping rate in each of Examples 1 to 3 is approximately 50% or less of that obtained in the Comparative Example. In addition, the light transmittance is 0%T in each Example while the light transmittance obtained in Comparative Example is 10%T. Therefore, it was demonstrated that good results were obtained in each Example. Regarding the experimental results listed in Table 5, the millimeter wave damping rate exceeded the aforementioned threshold of 2 dB for Examples 2 and 3. However, a decorative film having a conventional structure comprising a metal (tin) continuous film obtained by vacuum vapor deposition was used herein in the Comparative Example. Therefore, the results obtained in Examples 2 and 3 are acceptable when compared with those obtained in the Comparative example.

The embodiments of the present invention are described above in greater detail with reference to the drawings. However, the specific configuration of the present invention is not limited thereto. Various changes and modifications to the present invention made equally without departing from the spirit or scope thereof can be encompassed by the present invention.

## Claims

1. A decorative film formation method for forming a decorative film on the surface of a resin substrate to be positioned within a radar device path, wherein a decorative film comprising an organic film in which metal nanoparticles are dispersed is formed by producing an organic material comprising a solvent in which metal nanoparticles that are coordinated to organic molecules are dispersed, applying the organic material to the surface of a resin substrate, and volatilizing the solvent.

2. A decorative film formation method for forming a decorative film on the surface of a resin sheet to be bonded to the surface of a resin substrate to be positioned within a radar device path, wherein a decorative film comprising an organic film in which metal nanoparticles are dispersed is formed by producing an organic material comprising a solvent in which metal nanoparticles that are coordinated to organic molecules are dispersed, applying the organic material to the surface of a resin sheet, and volatilizing the solvent.

3. The decorative film formation method according to claim 1 or 2, wherein the particle size of the metal nanoparticles is from 2 nm to 800 nm.

4. The decorative film formation method according to any one of claims 1 to 3, wherein the organic material is prepared such that metal nanoparticle concentration in a decorative film to be formed is from 30% to 98% by weight.

5. The decorative film formation method according to any one of claims 1 to 4, wherein a decorative film with a thickness of 0.05 µm to 40 µm is formed.

6. A decorative film, which is formed on the surface of a resin substrate to be positioned within a radar device path, which comprises an organic film in which metal nanoparticles that are bound to each other by being coordinated to organic molecules are dispersed, and wherein the particle size of the metal nanoparticles is from 2 nm to 800 nm.

7. A decorative film, which is formed on the surface of a resin sheet to be bonded to the surface of a resin substrate to be positioned within a radar device path, which comprises an organic film in which metal nanoparticles that are bound to each other by being coordinated to organic molecules are dispersed, and wherein the particle size of the metal nanoparticles is from 2 nm to 800 nm.

8. The decorative film according to claim 6 or 7, wherein the particle size of the metal nanoparticles is from 2 nm to 15 nm.

9. The decorative film according to any one of claims 6 to 8, wherein the metal nanoparticle concentration in the decorative film is from 30% to 98% by weight.

10. The decorative film according to any one of claims 6 to 9, wherein the thickness of the decorative film is from 0.05 µm to 40 µm.
